# EUROPÄISCHE PATENTANMELDUNG

(11) **EP 1 056 175 A1**
(43) Veröffentlichungstag der Anmeldung: **29.11.2000**
(21) Anmeldenummer: 00110742.4
(22) Anmeldetag: 19.05.2000
(51) Int. Cl.: H02G 3/04

(54) **Rasterfrei verlegbare Kabelrinne mit steifem Boden**

(30) Priorität: 26.05.1999 DE 19923908
(71) Anmelder: Rieth & Co. GmbH, D-73230 Kirchheim (DE)
(72) Erfinder: Fink,Ewald, 73095 Albershausen (DE); Barner,Gerhard, 73230 Kirchheim (DE)
(74) Vertreter: Patentanwälte Rüger, Barthelt & Abel

(57) **Zusammenfassung**

Eine Kabelrinne 2 besteht aus einem im wesentlichen ebenen Boden 7 an dem sich seitlich Seitenwände 11,13 anschließen. Zur Erhöhung der Tragfähigkeit der Kabelrinne 2 bei gleicher Blechqualität oder Verminderung der Blechqualität bei gleicher Tragfähigkeit ist der Boden 7 mit einer Vielzahl von Sicken 23, 25, 26 versehen, die bezogen auf die Längserstreckung der Kabelrinne 2 in Querrichtung verlaufen.

Um eine rasterfrei Befestigung der Kabelrinne 2 auf den Auslegern 3 zu ermöglichen, enthält der Boden 7 insgesamt vier Reihen 15a, 15b, 18a, 18b von Langlöchern 16, 19, die paarweise neben der jeweiligen Seitenwand 11,13 verlaufen. Die Langlöcher 16, 19 in jeder Reihe 15a, 15b, 18a, 18b jedes Paares sind gegeneinander versetzt, so dass in dem Zwischenraum 17, 21 zwischen zwei Langlöchern 16, 19 der einen Reihe 15a, 15b, 18a, 18b ein Langloch 16, 19 der anderen Reihe 15a, 15b, 18a, 18b fluchtet.

## Beschreibung

Wenn in Gebäuden große Mengen von Kabeln verlegt werden müssen, werden hierzu Kabelrinnen verwendet. In diesen liegen die Kabel lose über- und neben-einander. Die Kabelrinnen ihrerseits sind in großen Abständen an Auslegern befestigt, die in dem Gebäude befestigt sind, beispielsweise über Deckenstile oder durch unmittelbare Montage an der Wand.

Der Abstand zwischen den Auslegern darf ein bestimmtes Maß nicht überschreiten, weil sonst die Kabelrinne unter der Last der darin liegenden Kabel durchknicken könnte. Unterhalb dieses Abstandes ist jeder andere beliebige Abstand möglich. Der tatsächliche Abstand ist nicht von vorne herein planbar, denn er hängt von den Ortsverhältnissen ab, und außerdem schwankt der Abstand selbst bei nominal gleicher Entfernung in Abhängigkeit von Montagetoleranzen.

Um die Kabelrinnen dennoch mit den Kabelrinnen fest zu verbinden, sind in den Böden der Kabelrinnen eine Vielzahl von Langlöchern enthalten, damit unabhängig von den jeweiligen Toleranzen die Kabelrinnen mit den Auslegern verschraubt werden können. Diese Verschraubung ist notwendig, damit die Kabelrinnen nicht beim Verlegen der Kabel von den Auslegern herunter gezogen werden können.

Die Langlöcher im Boden der Kabelrinne beeinträchtigt die Tragfähigkeit des Bodens, weshalb ein entsprechend stärkeres Blechmaterial für die Kabelrinnen benötigt wird, um eine ausreichende Spannweite zu erreichen.

Ausgehen hiervon ist es Aufgabe der Erfindung eine Kabelrinne zu schaffen, die bei gleicher Spannweite mit einer dünneren Blechqualität auskommt und andererseits nach wie vor rasterfrei verlegbar ist.

Diese Aufgabe wird erfindungsgemäß durch die Kabelrinne mit den Merkmalen des Anspruches 1 gelöst.

Bei der neuen Kabelrinne sind zumindest eine erste und zweite Reihe von Langlöchern vorgesehen, die jeweils längs einer Linie angeordnet sind, die sich parallel zu der Seitenkante der Kabelrinne erstreckt. Die Langlöcher in den beiden Reihen sind jeweils gegeneinander versetzt, d.h. bezogen auf die Längserstreckung der Kabelrinne, findet sich neben dem Zwischenraum zwischen benachbarten Langlöchern der einen Reihe auf der gleichen Höhe eine Langloch in der anderen Reihe und umgekehrt. Auf diese Weise überdecken sich die Langlöcher in den beiden Reihen. Bei der Montage wird wenigstens eines der Langlöcher über einem Ausleger zu liegen kommen.

Außerdem sind in dem Boden der Kabelrinne Sicken enthalten, die quer zur Längserstreckung der Kabelrinne und jeweils auf die Lücke zwischen einander benachbarten Langlöchern ausgerichtet sind, die weiter von der Seitenkante entfernt ist.

Überraschenderweise hat sich herausgestellt, dass diese Art Von Sicken die zulässige Spannweite bzw. Die Tragfähigkeit der Kabelrinne vergrößert, wenn gleiche Blechqualität verwendet wird bzw. bei vorgegebener Spannweite eine Verminderung der Blechstärke gestattet.

Durch die querverlaufenden Sicken wird eine Durchbiegung des Bodens der Kabelrinne um eine Achse verhindert, die sich auf derjenigen Seite des Bodens befindet, von der die Seitenwände aufragen. Da sich der Boden nicht mehr um diese Achse durchwölben kann, bleiben die Seitenwände besser aufrecht stehen und gewährleisten ihre Versteifungsfunktion. Würde sich der Boden hingegen nach unten konvex durchbiegen, klappen die Seitenwände aufeinander zu. Die Belastungen der Kabelrinne durch die Kabel würde zu einem weiteren Einwärtsbiegen der Seitenwände und zu einem Zusammenbruch der Tragfähigkeit führen. Da bei der erfindungsgemäßen Lösung der Boden flach bleibt, bleiben auch die Seitenwände aufrecht stehen und die Tragfähigkeit beleibt erhalten. Dieses Ergebnis ist überraschend, da der Fachmann zunächst erwarten würde, dass der durch die Sicken gewellte Boden die Stabilität der Anordnung verringert würde.

Wie die Unteransprüche zeigen, sind vielfältige Abwandlungen und Kombinationen der erfindungsgemäßen Idee möglich. Besonders effizient ist die erfindungsgernäße Ausgestaltung der Kabelrinne bei geraden Kabelrinnen, von denen eine große Spannweite erwartet wird, um die Installationskosten zu senken.

Zweckmäßigerweise haben die beiden Seitenwände der Kabelrinne gleiche Höhe gemessen ab dem Boden, um eine Symmetrie zu erreichen.

Die Stabilität in der Anordnung läßt sich weiter verbessern, wenn die Seitenwände an ihrem oberen Ende einen Umbug aufweisen. Dieser steift die Seitenwand gegenüber Knickkräften aus.

Die Montagevielfalt wird vergrößert, wenn neben jeder Längskante der Kabelrinne eine erste und zweite Reihe von Langlöchern vorgesehen ist, so dass insgesamt vier Reihen von Langlöchern enthalten sind, die parallel nebeneinander verlaufen.

Die Langlöcher jeder Reihe oder auch nur einer Reihe können untereinander dieselbe Länge vorweisen. Sinngemäß das gleiche gilt auch für die Zwischenräume.

Die Steifigkeit läßt sich weiter erhöhen, wenn zusätzlich zu der ersten Gruppe noch eine zweite Gruppe von Sicken enthalten ist. Die Sicken der zweiten Gruppe durchqueren die Zwischenräume der außenliegenden Reihe von Langlöchern. Hierdurch wird auch der Außenbereich des Bodens weiter versteift.

Eine noch größere Erhöhung der Steifigkeit läßt sich erreichen, wenn die Sicken der zweiten Gruppe um die Biegekante herumlaufen bzw. sich sogar in die Seitenwand fortsetzen. Die Seitenwände bleiben dann bei noch größeren Kräften aufrecht stehen und können ihre Versteifungsfunktion erfüllen. Es ist sogar möglich die Sicken bis durch den Umbug laufen zu lassen.

Für den Querschnitt der Sicken kommen sowohl teilkreisförmige Querschnitte als auch trapezförmige Querschnitte in Frage. Dabei ist es in jedem Fall von Vorteil, wenn sich die Sicken bezogen auf die Gebrauchsrichtung nach oben wölben, weil dadurch ein Luftspalt zwischen dem Rinnenboden und den Kabeln erreicht werden kann, durch den die Luft zwecks besserer Kühlung zirkulieren kann.

Im Übrigen sind Weiterbildungen der Erfindung Gegenstand von Unteransprüchen.

In der Zeichnung ist ein Ausführungsbeispiel des Gegenstandes der Erfindungen dargestellt. Es zeigen:
Fig. 1 eine Prinzipdarstellung eines Kabeltragsystems, in einer perspektivischen Teilansicht, und
Fig. 2-6 verschiedene Ausführungsbeispiele der erfindungsgemäßen Kabelrinnen in einer perspektivischen Ausschnittsdarstellung.

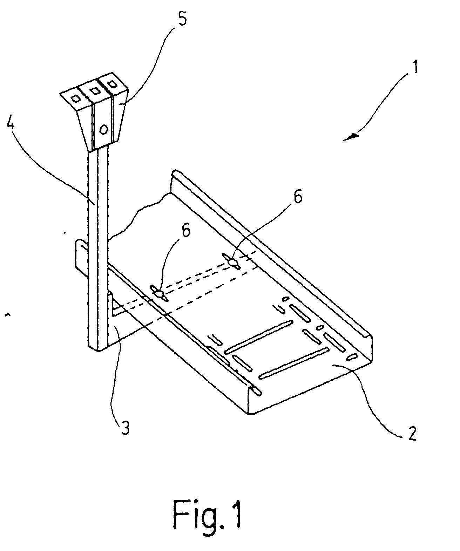

Fig. 1 zeigt ein Kabeltragsystem 1 in einer perspektivischen Ansicht. Das Kabeltragsystem 1, von dem lediglich ein Ausschnitt dargestellt ist, dient dazu, in einem Gebäude größere Bündel von Kabeln zu verlegen. Die nicht dargestellten Kabel liegen in sogenannten Kabelrinnen 2.

Die Kabelrinnen 2 liegen in größeren Abständen von mehreren Meter auf Auslegern 3, die an Hängestielen 4 befestigt sind. Die Anbringung des Hängestiels 4 an der nicht dargestellten Decke des Gebäudes erfolgt mit Kopfplatten 5.

Fig. 1 zeigt eine hängende Montage des Stiels 4, und statt der hängenden Montage kommt auch eine stehende Montage in Frage, oder es können die Ausleger unmittelbar an der Wand mit Hilfe von Zwischenplatten befestigt werden.

Damit die Kabelrinne bei Manipulationen nicht von dem Ausleger 3 abgleitet, ist die Kabelrinne 2 mit dem Ausleger 3 mittels Schrauben 6 verschraubt.

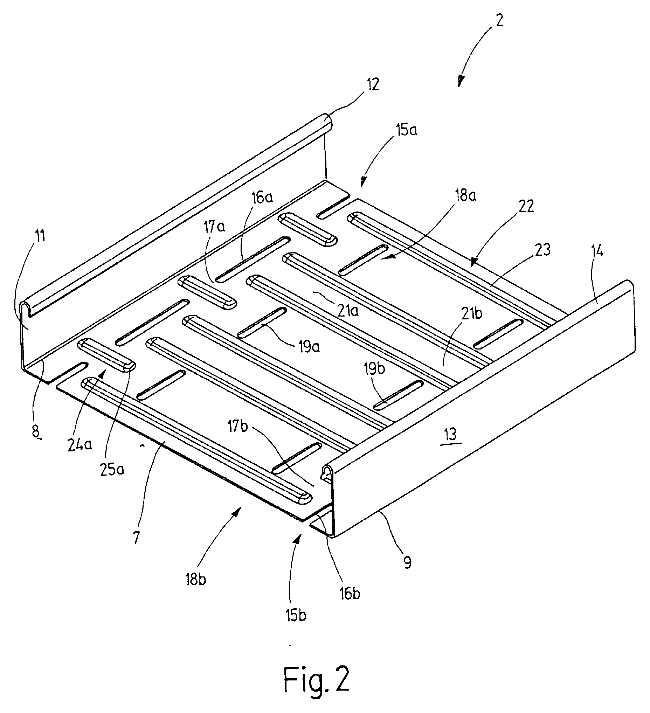

Fig. 2 zeigt in einer vergrößerten Darstellung die Gestalt der Kabelrinne 2.

Die Kabelrinne 2 ist ein Blechformteil und weist einen im Wesentlichen ebenen Boden 7 auf, der randseitig von zwei Biegekanten 8 und 9 begrenzt ist. Die beiden Biegekanten 8 und 9 verlaufen über die Länge der Kabelrinne 2 parallel zueinander, so dass der Boden 7 eine längliche rechteckige Gestalt bekommt. An der Biegkante 8 geht der Boden 7 einstückig in eine Seitenwand 11 über, die an ihrem oberen von dem Boden 7 abliegendem Ende mit einem 180° Umbug 12 versehen ist. Die Seitenwand 11 ist abgesehen von dem Umbug 12 ebenfalls plan und schließt mit dem Boden 7 einen Winkel von 90° ein.

Der Umbug 12 ist nach innen gerichtet und er zeigt mit seinem offenen Ende in Richtung auf den Boden 7.

An die Biegekante 9 schließt sich ebenfalls einstückig eine Seitenwand 13 an, deren freies Ende mit einem Umbug 14 versehen ist. Der Umbug 14 liegt an der Innenseite der Seitenwand 13, also jener Seite, die der Seitenwand 11 zugekehrt ist, und öffnet sich in Richtung auf den Boden 7. Die Seitenwand 13 ist auf Grund ihrer Gestaltung spiegelsymmetrisch zu der Seitenwand 11 und schließt mit dem Boden 7 ebenfalls einen Winkel von 90° ein.

Der Boden 7 zusammen mit den beiden Seitenwänden 11 und 13 bildet eine im Querschnitt gesehen rechtwinkelig U-förmig Rinne, deren Breite gemessen als Abstand zwischen den Biegekanten 8 und 9 deutlich größer ist als die Höhe der beiden Seitenwände 11 und 13.

Im Abstand von der Biegekante 8 ist eine erste Reihe 15a von Langlöchern 16a in dem Boden 7 ausgebildet. Die Langlöcher 16a haben alle die gleichen Abmessungen und liegen mit ihrer längeren Achse parallel zur Biegekante 8. Die Langlöcher 16a sind durch Zwischenräume 17a voneinander getrennt.

In einem größeren Abstand von der Biegekante 8 verläuft eine zweite Reihe 18a von Langlöchern 19a. Die Langlöcher 19a sind auf eine Linie aufgereiht, die sich ebenso wie die Linie, auf der die Langlöcher 16a aufgereiht sind, parallel zu der Biegekante 8 erstreckt, und außerdem liegen, die Langlöcher 19a mit ihrer größeren Erstreckung in Längsrichtung der Kabelrinne 2.

Die Langlöcher 19a sind untereinander durch Zwischenräume 21a von einander getrennt.

Wie die Fig. 2 erkennen läßt, sind die Langlöcher 16a gegenüber den Langlöchern 19a versetzt, derart, dass mit jedem Zwischenraum 17a ein Langloch 19a korrespondiert und mit jedem Zwischenraum 21a ein Langloch 16a. Der Zwischenraum 21a ist kleiner als die Länge des Langloches 16a und der Zwischenraum 17a ist kürzer als das Langloch 19a. Würde man die Reihe 18a in Richtung auf die Biegekante 8 verschieben, so dass sie deckungsgleich mit der Reihe 15a wird, würden die Langlöcher 16 und 19 endseitig einander überdecken. Die Überdeckung ist wenigstes so groß, wie es der Breite des Langloches 16 oder 19 entspricht.

Die Langlöcher 16 und 19 haben die gleiche Breite gemessen in Querrichtung, ihre Länge kann unterschiedlich oder gleich sein.

Neben der Biegekante 9 sind ebenfalls zwei Reihen 15b und 18b von Langlöchern 16b und 19b ausgebildet.

Die Langlöcher 16b und 19b sind bezüglich der Längsachse der Kabelrinne 2 spiegelbildlich zu den Langlöchern 16a und 19a angeordnet. Dies bedeutet, dass mit jedem Langloch 19b ein Langloch 19a und mit jedem Langloch 16b ein Langloch 16a fluchtet. Fluchten in diesem Sinne bedeutet, die dem Betrachter zugekehrten Enden von Langlöchern 19a und 19b liegen auf einer Geraden, die rechtwinkelig zu den beiden Seitenkanten 8 und 9 verläuft. Sinngemäß das gleiche gilt für die Langlöcher 16a und 16b.

Bei dem gezeigten Ausführungsbeispiel sind die Langlöcher 19 etwas kürzer als die Langlöcher 16. Dies ist jedoch keine zwingende Voraussetzung. Sämtliche Langlöcher 16 und 19 können auch gleich sein.

In dem Boden 7 der Kabelrinne 2 ist eine erste Gruppe 22 von Sicken 23 ausgeformt. Die Sicken 23 haben eine teilzylindrische Gestalt und wölben sich nach oben in der gleichen Richtung wie die Seitenwände 11 und 13. Jede Sicke 23 ist gerade und rechtwinkelig zu den beiden Biegekanten 8 und 9 ausgerichtet. Ihre Länge ist etwas kürzer als der Abstand der miteinander korrespondierenden Langlöcher 16a und 16b voneinander. Die Sicken 23 sind zwischen mit einander fluchtenden Langlöchern 16a und 16b zentriert angeordnet. Sie durchsetzen dementsprechend jeweils einen Zwischenraum 21a und 21b und enden im Abstand zu dem angrenzenden Langloch 16a bzw. 16b.

Die Sicken 23 sind zu Paaren angeordnet. Jeweils zwei Sicken 23 rahmen zwei miteinander fluchtende Langlöcher 19a und 19b ein; jeweils ein Zwischenraum 21a bzw 21b wird von zwei Sicken 23 durchquert.

Die gezeigte Kabelrinne 2 verfügt über eine zweite Gruppe 24a von Sicken 25a, die in unmittelbarer Nachbarschaft der Seitenwand 11 ausgeformt sind. Die Sicken 25a erheben sich ebenfalls nach oben, wobei jeweils eine Sicke 25a durch einen Zwischenraum 17a hindurch verläuft und im Abstand zu dem benachbarten Langloch 19a endet.

Neben der Seitenwand 13 befindet sich eine weitere zweite Gruppe von Sicken, die wie in der Darstellung durch die Seitenwand 13 verdeckt ist.

Die rechtwinkelig zu der Längserstreckung der Kabelrinne 2 verlaufenden Sicken 23 und 24 erhöhen die Biegesteifigkeit des Bodens 7 in Querrichtung also bezüglich einer Achse, die ebenfalls in Längsrichtung verläuft. Aufgrund dieser Aussteifung des Bodens 7 bleiben bei einer Belastung der Kabelrinne 2 die Seitenwände 11 und 13 aufrecht stehen und können die bei der Biegebelastung auftretenden Druckkräfte besser aushalten. Erst bei sehr viel größeren Kräften ist ein Kollabieren der Seitenwände zu beobachten.

Aufgrund praktischer Vergleiche hat sich herausgestellt, dass sich bei gleicher Blechstärke und sonst gleichen Abmessungen der Kabelrinne 2, die erfindungsgemäße Kabelrinne Spannweiten von 2 m überbrücken kann verglichen mit einer maximalen Spannweite von 1,5 m bei einer Kabelrinne mit glattem gelochtem Boden.

Umgekehrt gestattet es die erfindungsgemäße Konfiguration, die Breite der Kabelrinne 2 zu vergrößern, wenn die Spannweite mit einer vergleichbaren Kabelrinne mit schmälerem Querschnitt gewählt wird. Schließlich ist es denkbar, bei gleichem Querschnitt und gleicher Spannweite die Blechstärke verglichen mit dem Stand der Technik deutlich zu verringern. Werden gleicher Querschnitt und gleiche Spannweite vorausgesetzt, so beträgt die Blechstärke beim Stand der Technik 1,0 mm während bei der erfindungsgemäßen Kabelrinne 2, die Blechstärke auf 0,7 mm verringert werden kann.

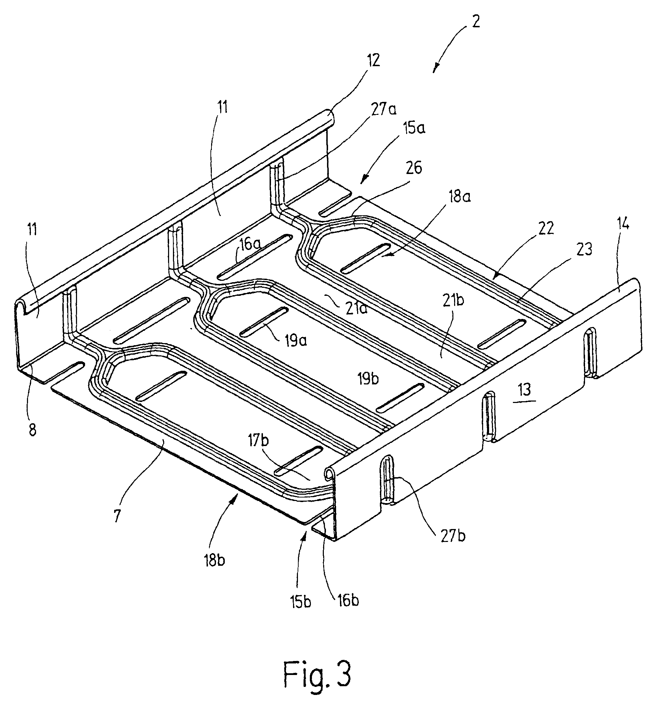

Fig. 3 zeigt eine alternative Lösung, bei der die Sicken 25a von jeweils einem Paar von Sicken 23 der ersten Gruppe 22 über gekrümmte Abschnitte 26 miteinander verbunden sind. Die gekrümmten Abschnitte 26 bilden zusammen mit dem Paar von den jeweiligen Langlöchern 19a, 19b zugeordneten Sicken 23 ein einer Rennbahn ähnliches Oval, das die darin jeweils befindlichen Langlöcher 19a und 19b umschließt. An jenen Stellen der bogenförmigen Sicken 23, die der betreffenden Seitenwand 11, 13 an nächsten liegt, mündet in die Sicke 24a ein.

Zur weiteren Versteifung der Seitenwand 11 bzw 13 ist jede Sicke 25a der zweiten Gruppe 24a bzw. 24b um die Biegekante 8 herum verlängert und sie setzt sich in einem Abschnitt 27a in der Seitenwand 11 fort.

Neben der Seitenwand 13 ist die Konfiguration spiegelbildlich, so dass man auf der Außenseite der Seitenwand 13 in Fig. 3 die konkave oder hohle Seite der Sicke 27b erkennen kann, die die nicht sichtbare Sicke 25b verlängert.

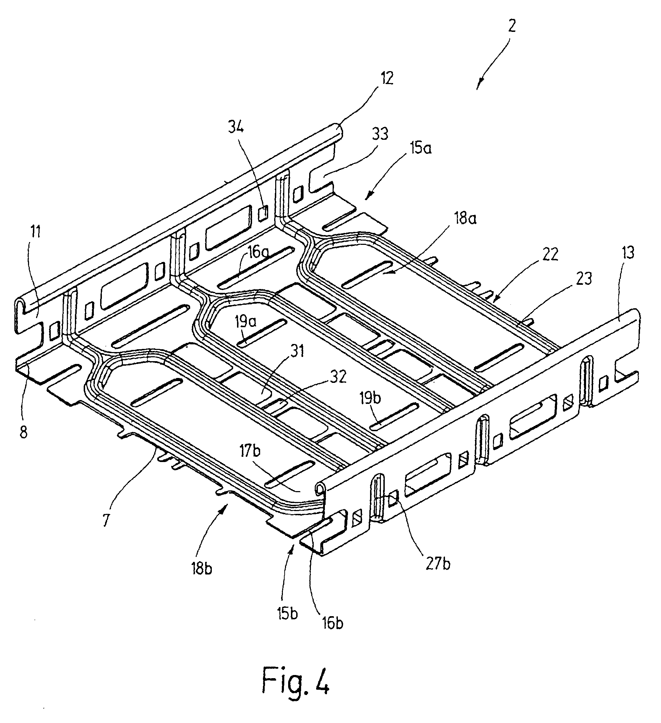

Fig. 4 zeigt ein Ausführungsbeispiel, dass sich von dem Ausführungsbeispiel nach Fig. 3 durch zusätzliche Ausschnitte oder Öffnungen unterscheidet. Die Konfiguration der Sicken 23, 25, 26 und 27 ist die dieselbe, wie sie in Zusammenhang mit Fig. 3 beschrieben ist. Der wesentliche Unterschied besteht darin, dass zwischen einander benachbarten Sicken 23, die zu unterschiedlichen Paaren gehören, zusätzlich rechteckige Öffnungen 31 ausgestanzt sind. Die Öffnungen 31 sind rechteckig und liegen zwischen zwei benachbarten Sicken 23, und gegebenfalls haben die Öffnungen 31 verschiedene Gestalt, wie dies bei der Öffnung 32 zu erkennen ist.

Fig. 4 läßt ferner erkennen, wie in den Seitenwänden 11 und 13 Ausschnitte in Gestalt rechteckiger Öffnungen 33 und quadratische Löcher 34 enthalten sein können. Die quadratischen Öffnungen 34 dienen beispielsweise der Aufnahme des Vierkants von Flachrundkopfschrauben mit Vierkantansatz (Schlossschrauben).

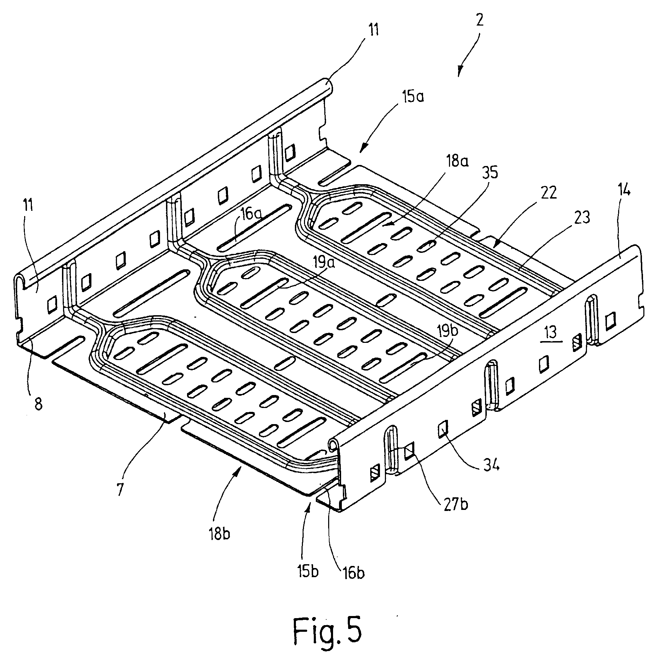

Das Ausführungsbeispiel nach Fig. 5 enthält eine Anordnung der Sicken, wie sie in Fig. 3 gezeigt sind. Ergänzend zu den Langlöchern 16 und 19 der beiden Reihen 15 und 18 neben den beiden Seitenwänden 11 und 13 sind weitere Reihen von Langlöchern 35 enthalten. Die Langlöcher 35 haben eine Länge der Art, dass jeweils zwei Langlöcher 35 zwischen zwei ein Paar bildende Sicken 23 passt, ohne die Sicken 23 anzuschneiden. Die längeren Achsen der Langlöcher 35 liegen in Längsrichtung der Kabelrinne 2.

Außerdem enthalten die Seitenwände 11 und 13 wie bei dem vorherigen Ausführungsbeispiel quadratische Löcher 34.

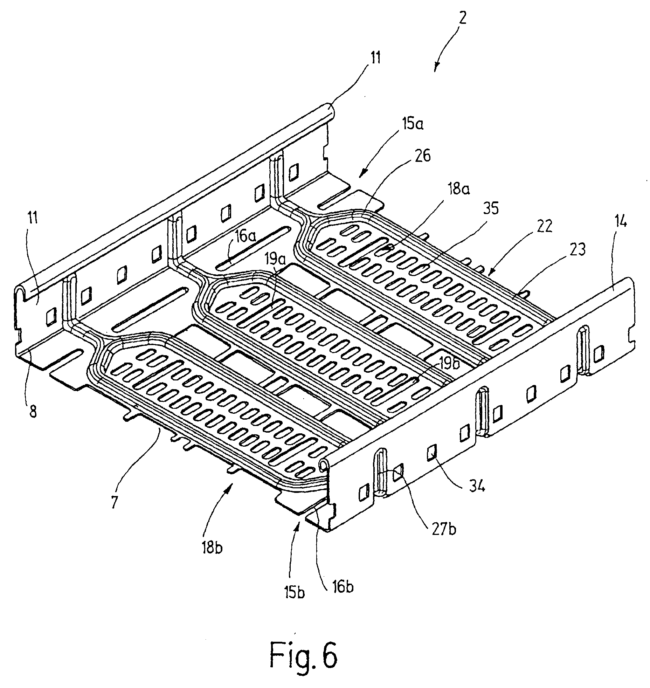

Fig. 6 zeigt schließlich ein Ausführungsbeispiel, bei dem das Lochmuster im Boden aus Fig. 4 mit dem Lochmuster des Bodens nach Fig. 5 kombiniert ist.

Erst die Sicken 23 gestatten es, den Boden 7 der Kabelrinne 2 derart stark zu lochen, um das Gewicht in der Kabelrinne zu verringern.

Eine Kabelrinne 2 besteht aus einem im wesentlichen ebenen Boden 7 an dem sich seitlich Seitenwände 11,13 anschließen. Zur Erhöhung der Tragfähigkeit der Kabelrinne 2 bei gleicher Blechqualität oder Verminderung der Blechqualität bei gleicher Tragfähigkeit ist der Boden 7 mit einer Vielzahl von Sicken 23, 25, 26 versehen, die bezogen auf die Längserstreckung der Kabelrinne 2 in Querrichtung verlaufen.

Um eine rasterfrei Befestigung der Kabelrinne 2 auf den Auslegern 3 zu ermöglichen, enthält der Boden 7 insgesamt vier Reihen 15a, 15b, 18a, 18b von Langlöchern 16, 19, die paarweise neben der jeweiligen Seitenwand 11,13 verlaufen. Die Langlöcher 16, 19 in jeder Reihe 15a, 15b, 18a, 18b jedes Paares sind gegeneinander versetzt, so dass in dem Zwischenraum 17, 21 zwischen zwei Langlöchern 16, 19 der einen Reihe 15a, 15b, 18a, 18b ein Langloch 16, 19 der anderen Reihe 15a, 15b, 18a, 18b fluchtet.

## Patentansprüche

1. Kabelrinne (2) zum Verlegen von Kabeln und dergleichen,
mit einem Boden (7), der über wenigstens einen Teil der Länge der Kabelrinne (2) mit im wesentliche konstanter Breite durchläuft und seitlich von zwei Längskanten (8,9) begrenzt ist,
mit zwei Seitenwänden (11,13), die mit dem Boden (7) verbunden sind und von den Längskanten (11,13) ausgehen,
mit wenigsten einer ersten Reihe (15) von Langlöchern (16), die längs einer zu einer der Längskanten (8,9) parallelen Linie angeordnet sind und deren längere Achse zu der betreffenden Längskante (8,9) parallel ist, wobei zwischen jeweils zwei benachbarten Langlöchern (16) ein Zwischenraum (17) vorhanden ist,
mit wenigsten einer zweiten Reihe (18) von Langlöchern (19), die längs einer zu der betreffenden Längskante (8,9) parallelen Linie angeordnet sind, deren längere Achse zu der betreffenden Längskante (8,9) parallel ist und die von der betreffenden Seitenwand (11,13) einen größeren Abstand haben als die Langlöcher (16) der ersten Reihe (15) von Langlöchern (16), wobei zwischen jeweils zwei benachbarten Langlöchern (19) ein Zwischenraum (21) vorhanden ist, der sich neben einem Langloch (16) der ersten Reihe (15) von Langlöchern (16) befindet, und
mit wenigstens einer ersten Gruppe (22) von Sicken (23), die in dem Boden (7) ausgebildet sind, die quer zu der Längserstreckung der Kabelrinne (2) ausgerichtet sind und von denen je eine bis in den Zwischenraum (17,21) zwischen benachbarten Langlöchern (16,19) einer Reihe (15,18) von Langlöchern (16,19) reicht.

2. Kabelrinne nach Anspruch 1, dadurch gekennzeichnet, dass sie mit Ausnahme von Endbereichen eine konstante Breite aufweist.

3. Kabelrinne nach Anspruch 1, dadurch gekennzeichnet, dass sie gerade ist.

4. Kabelrinne nach Anspruch 1, dadurch gekennzeichnet, dass die Seitenwände (11,13) die gleiche Höhe gemessen ab dem Boden (7) aufweisen.

5. Kabelrinne nach Anspruch 1, dadurch gekennzeichnet, dass wenigstens eine der Seitenwände (11,13) an ihrem oberen Ende einen Umbug (12,14) aufweist.

6. Kabelrinne nach Anspruch 1, dadurch gekennzeichnet, dass neben jeder Längskante (8,9) eine erste (15) und eine zweite (18) Reihe von Langlöchern (16,19) vorgesehen ist.

7. Kabelrinne nach Anspruch 1, dadurch gekennzeichnet, dass sämtliche Langlöcher (16,19) einer Reihe (15,18) von Langlöchern (16,19) untereinander dieselbe Länge aufweisen.

8. Kabelrinne nach Anspruch 1, dadurch gekennzeichnet, dass alle Langlöcher (16,19) dieselbe Länge aufweisen.

9. Kabelrinne nach Anspruch 1, dadurch gekennzeichnet, dass sämtliche Zwischenräume (17,21) einer jeweiligen Reihe von Langlöchern (16,19) untereinander dieselbe Länge aufweisen.

10. Kabelrinne nach Anspruch 1, dadurch gekennzeichnet, dass alle Zwischenräume (17,21) dieselbe Länge aufweisen.

11. Kabelrinne nach Anspruch 1, dadurch gekennzeichnet, dass die Zwischenräume (21) der beiden zweiten Reihen (18) von Langlöchern (19) miteinander fluchten.

12. Kabelrinne nach Anspruch 1, dadurch gekennzeichnet, dass zumindest ein Teil der Sicken (23) der ersten Gruppe (22) gerade sich erstreckende Sicken (23) sind.

13. Kabelrinne nach Anspruch 1, dadurch gekennzeichnet, dass sich zumindest ein Teil der Sicken (23) der ersten Gruppe (22) ausgehend von dem Boden (7) nach oben in dieselbe Richtung wie die Seitenwände (11,13) erhebt.

14. Kabelrinne nach Anspruch 1, dadurch gekennzeichnet, dass jede Sicke (23) der ersten Gruppe (23) von Sicken (23) bis in die Zwischenräume (21) der zweiten Reihe (18) von Langlöchern (19) reicht.

15. Kabelrinne nach Anspruch 1, dadurch gekennzeichnet, dass jede Sicke (23) der ersten Gruppe (22) von Sicken (23) länger ist als der Abstand der beiden zweiten Reihen (18) von Langlöchern (19) und kürzer als der Abstand der beiden ersten Reihen (15) von Langlöchern (16).

16. Kabelrinne nach Anspruch 1, dadurch gekennzeichnet, dass eine zweite Gruppe (24) von Sicken (25) vorhanden ist, wobei mit Ausnahme an den Enden der Kabelrinne (2) jede Sicke (25) der zweiten Gruppe (24) mit wenigstens einer Sicke (23) der ersten Gruppe (22) abwechselt.

17. Kabelrinne nach Anspruch 16, dadurch gekennzeichnet, dass zumindest ein Teil der Sicken (25) der zweiten Gruppe (24) gerade sich erstreckende Sicken (25) sind.

18. Kabelrinne nach Anspruch 16, dadurch gekennzeichnet, dass sich zumindest ein Teil der Sicken (25) der zweiten Gruppe (24) ausgehend von dem Boden (7) nach oben in dieselbe Richtung wie die Seitenwände (11,13) erhebt.

19. Kabelrinne nach Anspruch 16, dadurch gekennzeichnet, dass die Sicken (23,25) der einen Gruppe (22,24) ein Stück weit bis in den Zwischenraum zwischen benachbarten Sicken (23,25) der jeweils anderen Gruppe (22,24) hineinreichen.

20. Kabelrinne nach Anspruch 16, dadurch gekennzeichnet, dass zwei zweite Gruppen (24) von Sicken vorhanden sind.

21. Kabelrinne nach Anspruch 16, dadurch gekennzeichnet, dass die eine zweite Gruppe (24) von Sicken (25) der einen Seitenkante (8,9) und die andere zweite Gruppe (24) von Sicken (25) der anderen Seitenkante (8,9) zugeordnet ist, und dass die erste Gruppe (22) von Sicken (23) bezogen auf die Breite der Kabelrinne (2) zwischen den beiden zweiten Gruppen (24) von Sicken (25) angeordnet ist.

22. Kabelrinne nach Anspruch 1, dadurch gekennzeichnet, dass die Sicken (23) der ersten Gruppe (23) jeweils Paare von Sicken (23) bilden und die beiden Sicken (23) jedes Paars endseitig über gekrümmt verlaufende Sickenabschnitte (26) miteinander verbunden sind.

23. Kabelrinne nach den Ansprüchen 16 und 22, dadurch gekennzeichnet, dass jede Sicken (25) der zweiten Gruppe (24) in einen gekrümmt verlaufenden Sickenabschnitt (26) eines Paars von Sicken (23) der ersten Gruppe (22) einmündet.

24. Kabelrinne nach Anspruch 1 oder 16, dadurch gekennzeichnet, dass wenigstens einige der Sicken (23,25) einen teilkreisförmigen Querschnitt haben.

25. Kabelrinne nach Anspruch 1 oder 16, dadurch gekennzeichnet, dass wenigstens einige der Sicken (23,25) einen trapezförmigen Querschnitt haben.

26. Kabelrinne nach Anspruch 16, dadurch gekennzeichnet, dass sich die Sicken (25) der zweiten Gruppe (24) um die jeweilige Seitenkante (8,9) herum bis in die jeweilige Seitenwand (11,13) fortsetzen.

27. Kabelrinne nach den Ansprüchen 5 und 16, dadurch gekennzeichnet, dass sich die Sicken (25) der zweiten Gruppe (24) um den Umbug (12,14) der jeweiligen Seitenwand (11,12) herum fortsetzen.
